# EUROPÄISCHE PATENTSCHRIFT

(11) **EP 3 788 346 B1**
(45) Veröffentlichungstag und Bekanntmachung des Hinweises auf die Patenterteilung: **02.03.2022**
(21) Anmeldenummer: 19722561.8
(22) Anmeldetag: 02.05.2019
(51) Int. Cl.: G01N 21/67, G01J 3/443

(54) **FUNKENEMISSIONSSPEKTROMETER MIT ABTRENNBARER FUNKENKAMMER**
SPARK EMISSION SPECTROMETER WITH DETACHABLE SPARK CHAMBER
SPECTROMÈTRE D'ÉMISSION D'ÉTINCELLES À CHAMBRE À ÉTINCELLES SÉPARABLE

(30) Priorität: 04.05.2018 DE 102018110767
(43) Veröffentlichungstag der Anmeldung: 10.03.2021
(73) Patentinhaber: Elementar Analysensysteme GmbH, 63505 Langenselbold (DE)
(72) Erfinder: DOMINICK, Hans, 47533 Kleve (DE); MOLDERINGS, Michael, 47647 Kerken (DE)
(74) Vertreter: Keil & Schaafhausen Patentanwälte PartGmbB
(86) Internationale Anmeldenummer: PCT/EP2019/061234
(87) Internationale Veröffentlichungsnummer: WO 2019/211374

(56) Entgegenhaltungen:
- DE-A1-102005 058 160
- GB-A- 867 973
- GB-A- 967 047
- US-B2- 8 355 126

## Beschreibung

Die vorliegende Erfindung betrifft ein optisches Emissionsspektrometer mit einer Funkenkammer, welche eine Funkenstandsöffnung und eine in ihrem Inneren angeordnete längliche Elektrode zur Erzeugung eines Funkens und eines davon ausgehenden Lichtstrahls aufweist, und mit einer Ankopplungseinheit, welche zumindest ein auf einem Fensterhalter angeordnetes Fenster und einen Kanal aufzeigt, wobei die Funkenkammer und die Ankopplungseinheit so zueinander angeordnet sind, dass der Lichtstrahl durch das Fenster in den Kanal fällt.

Ein Emissionsspektrum ist dasjenige elektromagnetische Spektrum, das von Atomen, Molekülen und/oder Materialien ohne Einstrahlung elektromagnetischer Strahlung gleicher Frequenz ausgestrahlt wird. Dabei werden zunächst Atome und/oder Ionen durch Zuführung von Energie in Form des Funkens aus ihrem energetischen Grundzustand auf einen energetisch höher liegenden Zustand gebracht. Unter der angesprochenen spontanen Emission von Energie fallen sie dann in ihren energetischen Grundzustand zurück. Während das Emissionsspektrum von Atomen, Molekülen oder verdünnten Gasen ein Linienspektrum ist, emittieren heiße Festkörper und Flüssigkeiten ein kontinuierliches Spektrum. Dies liegt darin begründet, dass die einzelnen Atome zusätzlich miteinander wechselnd wirken und somit die diskreten Quantenzustände ineinander übergehen.

Die Funkenemissionsspektrometrie ist der Gruppe der optischen Emissionspektrometrie zuzuordnen. Sie wird vor allem zur Identifizierung von Metalllegierungen eingesetzt. Qualitative Aussagen sind dadurch möglich, dass die Energiedifferenzen insbesondere über das Plancksche Strahlungsgesetz, hinsichtlich der Wellenlänge elementspezifisch sind und somit jedes Element sein eigenes charakteristisches Linienspektrum aufweist. Quantitative Aussagen können getätigt werden, da die Intensität der gemessenen Strahlung proportional zur Anzahl der vorhandenen Atome oder Ionen ist.

Bei der Funkenemissionsspektrometrie wird die notwendige Energie zur Verdampfung der Probe und der anschließenden Dissoziierung bzw. Ionisierung und schließlich der Anregung üblicherweise durch eine unipolare Mittelspannungsfunkenentladung bei Funkenfolgefrequenzen von bis zu 1000 Hz erzeugt. Üblicherweise findet dies zwischen zwei Elektroden statt. Die Anode ist dabei eine fest im Spektrometer installierte Elektrode, wohingegen die zu analysierende Probe als Kathode fungiert.

Die Probe selbst muss hierzu elektrisch leitend sein, was entweder eine inhärente Materialeigenschaft ist, oder durch eine Verpressung des pulverförmig vorliegenden zu analysierenden Materials mit einem elektrisch leitenden Material, wie z. B. Graphit, erreicht wird. Üblicherweise wird Argon als Entladungsatmosphäre genutzt.

Der Abfunkprozess selbst besteht aus mehreren Schritten: In der Vorfunkzeit, bei der mehrere tausend Einzelfunkenentladungen einen Teil der Probenoberfläche umschmelzen, wird diese homogenisiert. So können gefühlte Einflüsse beseitigt und Einschlüsse wenigstens teilweise aufgelöst werden.

Optimal ist es, wenn die Vorfunkzeit im sogenannten stationären Abfunkzustand endet, also genau zu dem Zeitpunkt, bei dem die Probeoberfläche so homogenisiert ist, dass sich die gemessenen Intensitäten der Analysenlinien über den weiteren Zeitverlauf nicht mehr ändern. Ist ein solcher stationärer Zustand erreicht, schließt sich an die Vorfunkzeit die Integrationszeit an, in der in der klassischen Funkenemissionspektrometrie die Intensitäten von mehreren tausend einzelnen mit photosensitiven Sensoren, insbesondere CMOS Sensoren oder Photomultipliern (PMT) gemessen und anschließend integriert werden, was schließlich über eine Kalibrierung zu der Ausgabe von Massenanteilen führt.

Der Aufbau eines solchen Funkenemissionsspektrometers ist beispielsweise in der DE 10 2015 002 104 A1 beschrieben, welche einen Anregungsgenerator mit verbessertem elektrischen Wirkungsgrad zeigt.

Die DE 10 2005 058 160 A1 zeigt die Verbindung zwischen der eigentlichen Funkenkammer und der Spektrometeroptik.

Die US 8 355 126 B2 beschreibt ein Hand-Funkenspektrometer, welches batteriebetrieben ist. Dazu weist das optische Emmissionspektrometer eine Funkenkammer mit einer Funkenstandzöffnung und eine in ihrem Inneren angeordnete längliche Elektrode zur Erzeugung eines Funkens und eines davon ausgehenden Lichtstrahls auf. Über eine Ankopplungseinheit, welche zumindest eine auf einem Fensterhalter angeordnetes Fenster und einen Kanal aufweist, wird der Lichtstrahl durch das Fenster zu einem entsprechenden Detektor geführt. Funkenkammer und Ankopplungseinheit können mit einem Inertgas gespült werden. Allerdings besteht bei einer derartigen Vorrichtung das Problem, dass die Fenster nicht immer optimal gasdicht sind, so dass Lufteinschlüsse im Spektrometer vorhanden sind.

Die GB 867 973 A beschreibt ebenfalls ein derartiges Handgerät basierend auf der Funkenspektrometrie, welches jedoch dazu optimiert ist, die Zusammensetzung einer Metallschmelze zu bestimmen.

Besonders bei mobilen Geräten der Funkenspektroskopie, aber auch im stationären Bereich wird mindestens ein Teil des optischen Systems, die sogenannte UV-Optik, häufig mit Argon oder einem anderen Inertgas gespült, um die UV-Optik transparent für Licht mit Wellenlängen < 220 nm zu machen. In der Regel wird dabei Argon als Schutzgasatmosphäre verwendet.

Es ist zudem üblich, dass der Funkenkopf oder die Funkenkammer auswechselbar gestaltet ist und zur Reinigung abgenommen werden kann. Um diese modulare Zugänglichkeit zu ermöglichen, werden der Funkenkopf und die UV-Optik durch ein Fenster voneinander getrennt. Allerdings entsteht dabei ein kleiner Luftspalt zwischen den Fenstern, welcher nicht mit Argon gespült ist. Vertreter dieser Bauweise sind beispielsweis das SPECTROTEST ^{®} oder das SPECTROPORT^{®} der SPECTRO Analytical Instruments GmbH. Die darin enthaltene Luft absorbiert UV-Strahlung und beeinflusst so das Messergebnis.

Es ist daher Aufgabe der vorliegenden Erfindung, zu verhindern, dass es hierbei zu Lufteinschlüssen innerhalb des Funkenspektrometers kommt.

Diese Aufgabe wird durch ein optisches Emissionsspektrometer mit den Merkmalen des Anspruchs 1 gelöst.

Ein solches Emissionsspektrometer weist zum einen eine Funkenkammer auf, welche wenigstens eine Elektrode in ihrem Inneren angeordnet hat, welche bevorzugt hin zu einer Funkenstandsöffnung gerichtet ist. Im Betrieb liegt auf der Funkenstandsöffnung die zu messende Probe auf. Von der Elektrode wird ein Funken hin zu dieser Probe erzeugt, wodurch von diesem Funken ein Lichtstrahl ausgeht.

Weiterhin weist das optische Emissionsspektrometer eine Ankopplungseinheit auf, welche zumindest ein auf einem Fensterhalter angeordnetes Fenster und einen Kanal aufweist. Funkenkammer und Ankopplungseinheit sind so zueinander angeordnet, dass der erzeugte Lichtstrahl durch das Fenster in den Kanal fällt.

Funkenkammer und Ankopplungseinheit gleichermaßen mit einem Inertgas, bevorzugt, gespült werden können, da so die Absorption durch Luft vermieden werden kann.

Gegenstand der Erfindung ist es, dass die Funkenkammer im Betrieb direkt mit dem Fensterhalter und über den Fensterhalter mit der Ankopplungseinheit verbunden ist. Zwischen Funkenkammer und Fensterhalter ist ein Dichtelement vorgesehen. Die Ankopplungseinheit weist wenigstens ein elastisches Mittel auf, das so angeordnet ist, dass es den Fensterhalter gegen die Funkenkammer drückt. So kann die Ankopplungseinheit über das Fenster mit der Funkenkammer gasdicht verschlossen werden. Somit kann jede Form von Lufteinschlüssen und die dadurch bedingte Verfälschung der Messwerte verhindert werden.

In einer bevorzugten Ausgestaltung der Erfindung hat das Dichtelement eine kombinierte axiale und radiale Dichtwirkung, so dass sowohl das Eintreten von Luft nach innen als auch das Entweichen der Atmosphäre nach außen zuverlässig verhindert wird.

Besonders bevorzugt ist dabei, dass das Dichtelement ein O-Ring ist. Derartige O-Ringe sind in vielfältiger Weise auf dem Markt erhältlich. Üblicherweise bestehen sie aus Gummi. Sie stellen damit eine kostengünstige und leicht zu tauschende Dichtung dar.

Es hat sich weiterhin als bevorzugt herausgestellt, dass in Fensterhalter und/oder Funkenkammer eine Nut vorgesehen ist, in die das Dichtelement eingelegt werden kann. Dies erleichtert ein erneutes Abdichten nach Bewegung des Funkenkopfes oder Austauschen des Dichtmaterials.

Ergänzend oder alternativ hat es sich als günstig herausgestellt, wenn der Fensterhalter aus Messing gefertigt ist. Dieses Material weist günstige Fertigungseigenschaften auf und entspricht auch dem Anforderungsprofil der optischen Emissionsspektroskopie im Betrieb.

In diesem Zusammenhang ist es auch bevorzugt, dass das Fenster in dem Fensterhalter aus MgF₂ oder aus Quarz gefertigt ist. Dieses Material beeinflusst typische in der optischen Emissionsspektroskopie gewonnene Spektren kaum.

In einer anderen bevorzugten Ausgestaltung ist das elastische Mittel, welches den Fensterhalter gegen die Funkenkammer drückt, wenigstens ein vorgespanntes Metallteil, welches somit auch den Vorteil einer einfachen Fertigung bietet. In diesem Zusammenhang ist die Ausgestaltung des wenigstens einen elastischen Mittels als Federstahl besonders positiv.

In einer weiteren bevorzugten Ausführungsform weist die Ankopplungseinheit einen Spiegel auf, der so angeordnet ist, dass er den aus dem Kanal kommenden Lichtstrahl um 25 bis 70°, bevorzugt um 40 bis 50° in einen zweiten Kanal umlenkt. Dies bietet den Vorteil einer kompakteren Bauweise des gesamten Emissionsspektrometers.

Als günstig hat sich auch herausgestellt, dass die Elektrode durch eine Elektrodenspannzange gehalten wird. Dadurch kann die Elektrode vergleichsweise einfach gewechselt werden.

Die Elektrodenspannzange ist bevorzugt in einer Hülse aus einem Isolationsmaterial angeordnet, welches beispielsweise Teflon oder Keramik ist. Dadurch können Funkenüberschläge von der Elektrode verhindert werden.

Schließlich ist es bevorzugt, dass die Funkenkammer mit einer Halterungsvorrichtung fixiert wird. Dies kann beispielsweise durch eine Rasterung oder ein Gewinde erreicht werden.

Weitere Merkmale, Vorteile und Anwendungsmöglichkeiten der Erfindung ergeben sich auch aus der nachfolgenden Beschreibung der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbezügen.

Es zeigt:

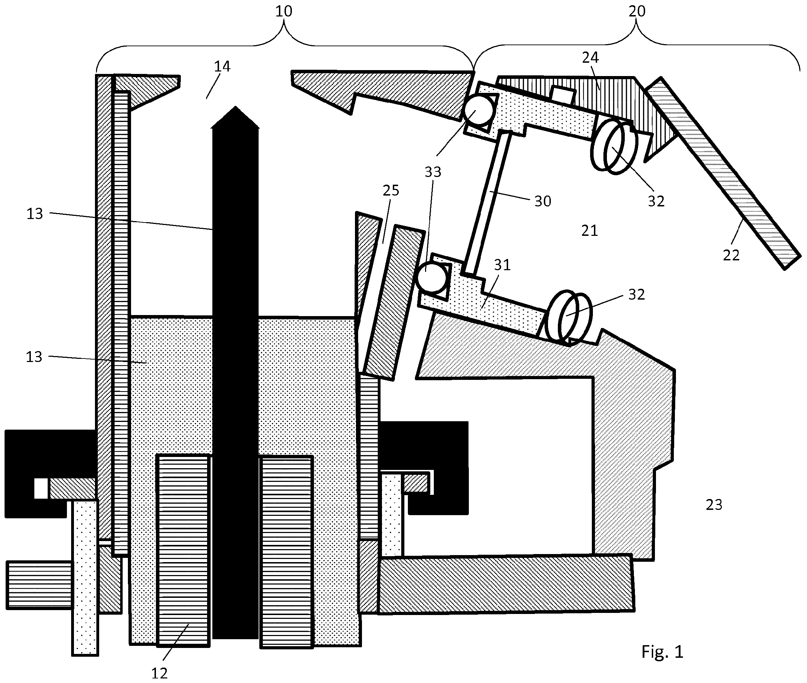

- Fig. 1: den Aufbau eines erfindungsgemäßen optischen Emissionsspektrometers.

Die Funkenkammer oder Funkenkopf 10 weist in ihrem Inneren eine Elektrode 11 auf, welche in einer nicht dargestellten Weise eine Spannung aufgebracht werden kann, so dass diese Elektrode 11 im Betrieb als Anode fungiert. Diese Elektrode 11 steckt in der Elektrodenspannzange 12 auf, welche vorzugsweise aus Messing gefertigt ist. Die Elektrodenspannzange ist in einem Isolationskörper 13, welcher vorzugsweise aus Teflon oder Keramik gefertigt ist, eingefasst.

Weiterhin findet sich in der Funkenkammer10, bevorzugt gegenüber der Elektrode 11 eine Funkenstandsöffnung 14, auf welche im Betrieb die zu vermessende Probe aufgelegt wird. Der vollständige Funkenkopf 10 wird mit Inertgas, vorzugsweise Argon, gespült.

Im Betrieb wird dann von der Elektrode 11 zu dieser nicht dargestellten Probe mehrere tausend Einzelfunken erzeugt, wodurch ein Lichtstrahl entsteht. Der dabei entstehende Lichtstrahl fällt durch das Fenster 30, welches vorzugsweise aus Magnesiumfluorid oder Quarz besteht, geleitet und gelangt von dort in die Ankopplungsvorrichtung 20. Bevorzugt fällt es dort durch den vom Gehäuse 24 umgrenzten Kanal 21 auf den Spiegel 22, welcher den Lichtstrahl in einen zweiten Kanal 23 umlenkt. Der gesamte Lichtweg innerhalb der Ankopplungseinheit 20 bestehend aus dem ersten und dem zweiten Kanal 21, 23 wird ebenfalls mit Inertgas gespült, welches bevorzugt über einen Kanal zur Einbringung von Inertgas 25 eingedüst wird.

Das Fenster wird mittels eines Fensterhalters 31 fixiert. Der Fensterhalter 31 ist vorzugsweise aus Messing gefertigt. Dieser Fensterhalter 31 ruht auf wenigstens einem elastischen Mittel 32, vorzugsweise einem Federstahl, der dafür sorgt, dass der Fensterhalter 31 permanent in Richtung Funkenkammer 10 gedrückt wird.

Weiterhin findet sich zwischen Funkenkammer 10 und Fensterhalter 31 ein Dichtelement 33, vorzugsweise ein O-Ring, um eine Dichtwirkung zwischen Fensterhalter 31 und Funkenkammer 10 sicherzustellen. Der Gegendruck des elastischen Mittels 32 sorgt in Kombination mit dem Dichtelement 33, z. B. dem O-Ring, für eine gasdichte Abdichtung von Funkenkammer 10 und Ankopplungseinheit 20. Dieser Gegendruck wird durch Fixierung der Funkenkammer und/oder der Ankopplungseinheit 20, beispielsweise durch Einschrauben in ein Gewinde und/oder wenigstens eine Einrastvorrichtung sichergestellt.

### Bezugszeichenliste

- 10: Funkenkammer
- 11: Elektrode
- 12: Elektrodenspannzange
- 13: Isolationskörper
- 14: Funkenstandsöffnung
- 20: Ankopplungseinheit
- 21: Kanal
- 22: Spiegel
- 23: zweiter Kanal
- 24: Gehäuse
- 25: Kanal zur Einbringung von Inertgas
- 30: Fenster
- 31: Fensterhalter
- 32: elastisches Mittel
- 33: Dichtelement
- 34: Nut

## Patentansprüche

1. Optisches Emissionsspektrometer mit einer Funkenkammer (10), welche eine Funkenstandsöffnung (14) und eine in ihrem Inneren angeordnete längliche Elektrode (11) zur Erzeugung eines Funkens und eines davon ausgehenden Lichtstrahls aufweist, und mit einer Ankopplungseinheit (20), welche zumindest ein auf einem Fensterhalter (31) angeordnetes Fenster und einen Kanal aufweist, wobei die Funkenkammer (10) und die Ankopplungseinheit (20) so zueinander angeordnet sind, dass der Lichtstrahl durch das Fenster (30) in den Kanal (21) fällt, und wobei die Funkenkammer (10) und die Ankopplungseinheit (20) Mittel zur Spülung mit einem Inertgas aufweisen, **dadurch gekennzeichnet, dass** die Funkenkammer (10) direkt mit dem Fensterhalter (31) und über den Fensterhalter (31) mit der Ankopplungseinheit (20) verbunden ist, wobei zwischen Funkenkammer (10) und Fensterhalter (31) ein Dichtelement (33) vorgesehen ist, und dass die Ankopplungseinheit (20) wenigstens ein elastisches Mittel aufweist, dass so angeordnet ist, dass es den Fensterhalter (31) gegen die Funkenkammer (10) drückt.

2. Optisches Emissionsspektrometer nach Anspruch 1, **dadurch gekennzeichnet, dass** das Dichtelement (33) eine kombinierte axiale und radiale Dichtwirkung hat.

3. Optisches Emissionsspektrometer nach Anspruch 1 oder 2, **dadurch gekennzeichnet, dass** das Dichtelement (33) ein O-Ring ist.

4. Optisches Emissionsspektrometer nach einem der vorhergehenden Ansprüche, **dadurch gekennzeichnet, dass** in Fensterhalter (31) und/oder Funkenkammer (10) eine Nut (34) vorgesehen ist, in die das Dichtelement (33) eingelegt werden kann.

5. Optisches Emissionsspektrometer nach einem der vorhergehenden Ansprüche, **dadurch gekennzeichnet, dass** der Fensterhalter (31) aus Messing ist.

6. Optisches Emissionsspektrometer nach einem der vorhergehenden Ansprüche, **dadurch gekennzeichnet, dass** das Fenster (30) aus MgF₂ oder aus Quarz ist.

7. Optisches Emissionsspektrometer nach einem der vorhergehenden Ansprüche, **dadurch gekennzeichnet, dass** das elastische Mittel (32) mindestens ein vorgespanntes Metallteil ist.

8. Optisches Emissionsspektrometer nach einem der vorhergehenden Ansprüche, **dadurch gekennzeichnet, dass** das elastische Mittel (32) wenigstens Federstahl ist.

9. Optisches Emissionsspektrometer nach einem der vorhergehenden Ansprüche, **dadurch gekennzeichnet, dass** die Ankopplungseinheit (20) einen Spiegel aufweist, welcher so angeordnet ist, dass er den aus dem Kanal (21) kommenden Lichtstrahl um 25 bis 70 ° in einen zweiten Kanal (23) umlenkt.

10. Optisches Emissionsspektrometer nach einem der vorhergehenden Ansprüche, **dadurch gekennzeichnet, dass** die Elektrode (11) durch eine Elektrodenspannzange (12) gehalten wird.

11. Optisches Emissionsspektrometer nach Anspruch 10, **dadurch gekennzeichnet, dass** die Elektrodenspannzange (12) in einer Hülse aus einem Isolationsmaterial (13) angeordnet ist.

12. Optisches Emissionsspektrometer nach einem der vorhergehenden Ansprüche, **dadurch gekennzeichnet, dass** die Funkenkammer (10) und/oder die Ankopplungseinheit (20) mit einem Gewinde und/oder einer Rastvorrichtung fixiert wird/werden.

## Claims

1. An optical emission spectrometer with a spark chamber (10) which comprises a spark stand opening (14) and an oblong electrode (11) being arranged inside thereof for generating a spark and a beam of light originating therefrom, and with a coupling unit (20) which comprises at least one window being arranged on a window holder (31) and a channel, wherein the spark chamber (10) and the coupling unit (20) are arranged with respect to each other such that the beam of light falls through the window (30) into the channel (21), and wherein the spark chamber (10) and the coupling unit (20) comprise means for purging with an inert gas, **characterized in that** the spark chamber (10) is directly connected with the window holder (31) and via the window holder (31) with the coupling unit (20), wherein between spark chamber (10) and window holder (31) a sealing element (33) is provided, and that the coupling unit (20) comprises at least one elastic means which is arranged such that it presses the window holder (31) against the spark chamber (10).

2. The optical emission spectrometer according to claim 1, **characterized in that** the sealing element (33) has a combined axial and radial sealing effect.

3. The optical emission spectrometer according to claim 1 or 2, **characterized in that** the sealing element (33) is an O-ring.

4. The optical emission spectrometer according to one of the preceding claims, **characterized in that** in window holder (31) and/or spark chamber (10) a flute (34) is provided into which the sealing element (33) can be inserted.

5. The optical emission spectrometer according to one of the preceding claims, **characterized in that** the window holder (31) is made of brass.

6. The optical emission spectrometer according to one of the preceding claims, **characterized in that** the window (30) is made of MgF₂ or of quartz.

7. The optical emission spectrometer according to one of the preceding claims, **characterized in that** the elastic means (32) is at least one pre-stressed metal part.

8. The optical emission spectrometer according to one of the preceding claims, **characterized in that** the elastic means (32) is at least spring steel.

9. The optical emission spectrometer according to one of the preceding claims, **characterized in that** the coupling unit (20) comprises a mirror which is arranged such that it redirects the beam of light coming from the channel (21) by 25 to 70° into a second channel (23).

10. The optical emission spectrometer according to one of the preceding claims, **characterized in that** the electrode (11) is held by an electrode collet chuck (12).

11. The optical emission spectrometer according to claim 10, **characterized in that** the electrode collet chuck (12) is arranged in a sleeve made of an isolation material (13).

12. The optical emission spectrometer according to one of the preceding claims, **characterized in that** the spark chamber (10) and/or the coupling unit (20) is/are fixed with a thread and/or a lock-in device.

## Revendications

1. Spectromètre d'émission optique avec une chambre à étincelles (10), lequel comporte une ouverture fixe à étincelles (14) et une électrode (11) longitudinale disposée dans son intérieur pour produire une étincelle et un rayon lumineux partant de celle-ci et avec une unité de couplage (20), laquelle comporte au moins une fenêtre disposée sur un support de fenêtre (31) et un conduit, sachant que la chambre à étincelles (10) et l'unité de couplage (20) sont disposées l'une par rapport à l'autre de telle sorte que le rayon lumineux tombe à travers la fenêtre (30) dans le conduit (21) et sachant que la chambre à étincelles (10) et l'unité de couplage (20) comporte un moyen de balayage avec un gaz inerte, **caractérisé en ce que** la chambre à étincelles (10) est relié directement au support de fenêtre (31) et à l'unité de couplage (20) par le biais du support de fenêtre (31), sachant qu'un élément d'étanchéité (33) est prévu entre la chambre à étincelles (10) et le support de fenêtre (31) et **en ce que** l'unité de couplage (20) comporte au moins un moyen élastique qui est disposé de telle sorte qu'il appuie le support de fenêtre (31) contre la chambre à étincelles (10).

2. Spectromètre d'émission optique selon la revendication 1, **caractérisé en ce que** l'élément d'étanchéité (33) a un effet d'étanchéité axial et radial combiné.

3. Spectromètre d'émission optique selon la revendication 1 ou 2, **caractérisé en ce que** l'élément d'étanchéité (33) est un joint torique.

4. Spectromètre d'émission optique selon l'une quelconque des revendications précédentes, **caractérisé en ce que** dans le support de fenêtre (31) et/ou la chambre à étincelles (10), une rainure (34) est prévue dans laquelle l'élément d'étanchéité (33) peut être introduit.

5. Spectromètre d'émission optique selon l'une quelconque des revendications précédentes, **caractérisé en ce que** le support de fenêtre (31) est en laiton.

6. Spectromètre d'émission optique selon l'une quelconque des revendications précédentes, **caractérisé en ce que** la fenêtre (30) est en MgF₂ ou en quartz.

7. Spectromètre d'émission optique selon l'une quelconque des revendications précédentes, **caractérisé en ce que** le moyen élastique (32) est au moins une pièce métallique précontrainte.

8. Spectromètre d'émission optique selon l'une quelconque des revendications précédentes, **caractérisé en ce que** le moyen élastique (32) est au moins de l'acier de ressort.

9. Spectromètre d'émission optique selon l'une quelconque des revendications précédentes, **caractérisé en ce que** l'unité de couplage (20) comporte un miroir, lequel est disposé de telle sorte qu'il dévie de 25 à 70° dans un deuxième conduit (23) le rayon lumineux venant du conduit (21).

10. Spectromètre d'émission optique selon l'une quelconque des revendications précédentes, **caractérisé en ce que** l'électrode (11) maintenue par une pince de serrage d'électrode (12).

11. Spectromètre d'émission optique selon la revendication 10, **caractérisé en ce que** la pince de serrage d'électrode (12) est disposée dans un manchon fait d'un matériau d'isolation (13).

12. Spectromètre d'émission optique selon l'une quelconque des revendications précédentes, **caractérisée en ce que** la chambre à étincelles (10) et/ou l'unité de couplage (20) est/sont fixée(s) avec un filetage et/ou un dispositif d'encliquetage.
